# EUROPÄISCHE PATENTSCHRIFT

(11) **EP 1 619 633 B1**
(45) Veröffentlichungstag und Bekanntmachung des Hinweises auf die Patenterteilung: **19.03.2008**
(21) Anmeldenummer: 05106356.8
(22) Anmeldetag: 12.07.2005
(51) Int. Cl.: G07C 9/00, B60R 25/00, E05B 65/20

(54) **Verfahren zum Steuern der Entriegelung oder Verriegelung der Türen eines Kraftfahrzeuges**
Control Method for locking or unlocking doors in a motor vehicle
Procédé de contrôle pour le verrouillage ou déverrouillage des portes d'un véhicule à moteur

(30) Priorität: 22.07.2004 DE 102004035585
(43) Veröffentlichungstag der Anmeldung: 25.01.2006
(73) Patentinhaber: Hella KGaA Hueck & Co., 59552 Lippstadt (DE)
(72) Erfinder: Scharwald, Lothar, 59558, Lippstadt (DE); Schütte, Guido, 59555, Lippstadt (DE); Kemper, Ursula, 33102 Paderborn (DE); Nilles, Werner, 59555, Lippstadt (DE); Siekmann, Daniel, 59556, Lippstadt (DE); Werner, Stefan, 59555, Lippstadt (DE)

(56) Entgegenhaltungen:
- EP-A- 1 235 190
- EP-A- 1 339 025
- EP-A- 1 505 734

## Beschreibung

Die Erfindung bezieht sich auf ein Verfahren zum Steuern der Entriegelung oder Verriegelung der Türen eines Kraftfahrzeuges in Verbindung mit einem sogenannten Passive Entry/Go-System. Fahrzeuge mit einem solchen System umfassen einen benutzerseitig mitführbaren, tragbaren ID-Geber (auch Funkschlüssel genannt), mindestens eine fahrzeugseitige Sende-/Empfangsantenne für eine funkbasierte Authentifikationskommunikation mit dem ID-Geber sowie mindestens einen kapazitiven Türgriffsensor, der als Näherungssensor jeweils dem Türgriff einer Fahrzeugtür zugeordnet ist. Dabei wird die Authentifikationskommunikation durch das Aussenden eines Funk-Startsignals durch die fahrzeugseitige Sende-/Empfangsantenne gestartet, wenn an dem Türgriffsensor aufgrund der Annäherung einer menschlichen Hand eine Kapazitätsänderung um einen vorbestimmten ersten Wert (Annäherungsschwelle) sensiert wird. Das Funk-Startsignal ist quasi ein "Aufwecksignal" für den ID-Geber. Ein aktives Betätigen einer Drucktaste am ID-Geber ist in einem Passive Entry/Go-System nicht mehr erforderlich. Gleichzeitig mit der weiteren Annäherung der Hand an den Türgriff erfolgt dann die Authentifikationskommunikation, wobei die Authentifikationskommunikation in der Regel bereits abgeschlossen ist, bevor die Hand zur Entriegelung haptisch in den Türgriff eingegriffen hat. Dabei erfolgt ein Entriegelungsbefehl an eine elektromechanische Entriegelungseinrichtung (Zentralverriegelungsanlage) nur dann, wenn die Authentifikationskommunikation erfolgreich abgeschlossen wurde, d.h. ein berechtigter ID-Geber identifiziert wurde, und das haptische Eingreifen der Hand in Türgriff als ultimativer Entriegelungswunsch durch eine Kapazitätsänderung am Türgriffsensor um einen höheren, zweiten vorbestimmten Wert (Entriegelungsschwelle) erkannt wird. Das Starten der Authentifikationskommunikation bereits bei Annäherung der Hand (Überschreiten des ersten, niedrigeren Kapazitätsänderungswertes) bewirkt einen Zeitvorteil, damit dann, wenn der Türgriff tatsächlich entriegelt werden soll, die Authentifikationskommunikation bereits abgeschlossen ist. Ein Kraftfahrzeug mit einem kapazitiven Türgriffsensor ist aus der DE 196 17 038 C2 bekannt.

Es hat sich nun herausgestellt, dass Niederschlag (Regen, Schnee, Hagel, Nebel etc.) aufgrund seiner von Luft verschiedenen dielektrischen Eigenschaften eine Kapazitätsänderung am Türgriffsensor bewirken kann, die so groß ist, dass der Wert (Annäherungsschwelle) zum Auslösen des Funk-Startsignals überschritten wird. Dies führt dazu, dass bei Niederschlag ständig Funk-Startsignals ausgesendet werden. Das Aussenden der Funksignale ist jedoch mit einem relativ hohen Stromverbrauch verbunden, so daß die niederschlagsbedingten Fehlauslösungen zu einer Entladung der Fahrzeugbatterie führen.

Aus diesem Grunde wird in der EP 1 505 734A2 vorgeschlagen, im Fall der Detektion von Niederschlag eine zweite Schaltschwelle für den Vergleich mit der Kapazitätsänderung aktiviert wird, wobei das Aussenden eines Funk-Startsignals nur noch erfolgt, wenn eine Kapazitätsänderung diese zweite höhere Schaltschwelle überschreitet. Als Mittel zur Detektion von Niederschlag wird gemäß EP 1 505 734A2 der zeitliche Verlauf der Kapzitätsänderung an einem kapazitiven Türgriffsensor bewertet, wobei der Signalverlauf einer durch Regentropfen verursachten Kapazitätsänderung ein oder mehrere lokale Maxima bzw. Minima aufweisen soll. Diese Art der Niederschlagsdetektion ist jedoch mit einer erheblichen Unsicherheit behaftet.

Gemäß EP 1 235 190 A1 wird vorgeschlagen, den Regeneinfluß zu kompensieren, indem in schnellen Abständen Rekalibrierungen des kapazitiven Türgriffsensors durchgeführt werden.

Aufgabe der Erfindung ist es, eine zuverlässige alternative Lösung für das Problem der Niederschlagsdetektion und damit der durch Niederschlag ausgelösten Fehlauslösungen zu finden.

Diese Aufgabe wird durch die Merkmale des Anspruchs 1 gelöst.

Erfindungsgemäß werden als Mittel zur Detektion von Niederschlag mindestens zwei kapazitive Türgriffsensoren verwendet. Dabei erfolgt die Detektion von Niederschlag dadurch, dass das Eintreten eines Ereignisses überwacht wird, das darin besteht, dass an einem ersten Türgriffsensor und an mindestens einem weiteren Türgriffsensor (5A, 5B, 5C, 5D, 5E) innerhalb eines Kontrollzeitfensters jeweils mindestens einmal eine Kapazitätsänderung um mindestens einen vorbestimmten Wert, der vorzugsweise der Annäherungsschwelle entspricht, sensiert wird.

Gemäß EP 1235 190 A1 und EP 1 505 734 A1 wird nur das Sensorsignal eines Türgriffsensors für sich allein betrachtet.

Erfindungsgemäß wird im Fall der Detektion von Niederschlag das Funk-Startsignal durch die fahrzeugseitige Sende-/Empfangsantenne nur noch dann gesendet wird, wenn an einem Türgriffsensor eine Kapazitätsänderung um einen vorbestimmten höheren Wert sensiert wird, der der Entriegelungsschwelle entspricht.

Anhand der beigefügten Zeichnungen soll die Erfindung nachfolgend näher erläutert werden. Es zeigt:
- Figur 1: die schematische Ansicht eines Kraftfahrzeuges mit einem Passive Entry/Go-System,
- Figur 2: den Kapazitätsverlauf an einem Türgriffsensor bei Annäherung einer Hand,
- Figur 3: den Kapazitätsverlauf an zwei Türgriffsensoren bei Niederschlag.

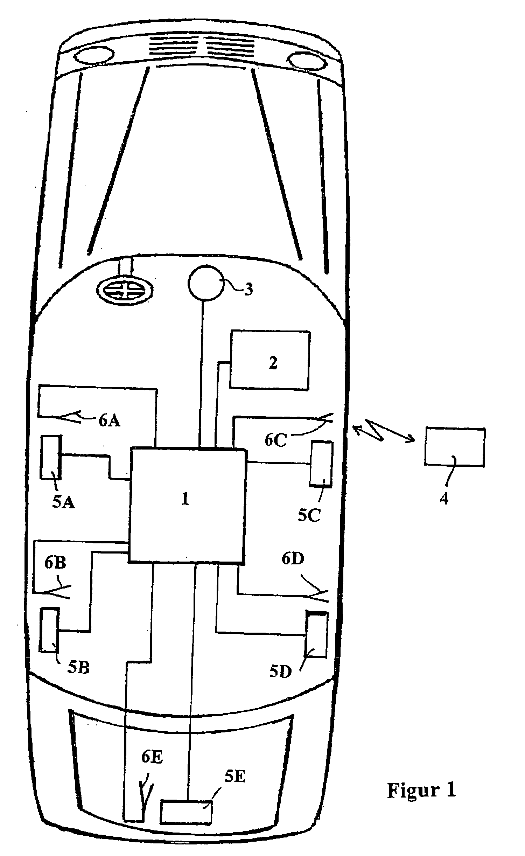

Figur 1zeigt die schematische Ansicht eines Kraftfahrzeuges mit einem Passive Entry/Go-System. Das Kraftfahrzeug weist im dargestellten Beispiel 5 kapazitive Türgriffsensoren (5A, 5B, 5C, 5D, 5E) auf, wobei jeweils der vorderen und der hinteren Tür der Fahrer- und der Beifahrerseite sowie der Heckklappe ein Türgriffsensor zugeordnet ist. Die Signale der Türgriffsensoren (5A, 5B, 5C, 5D, 5E) sind einer Auswerte- und Ansteuereinheit (1) zugeführt. Darüber hinaus ist jeder Tür und der Heckklappe jeweils eine Sende-/Empfangsantenne (6A, 6B, 6C, 6D, 6E) für die Funk-Kommunikation mit dem ID-Geber (4) außerhalb des Fahrzeugs zugeordnet. Die Sende-/Empfangsantennen (6A, 6B, 6C, 6D, 6E) sind ebenfalls mit der Auswerte- und Ansteuereinheit (1) verbunden. Ebenfalls mit der Auswerte- und Ansteuereinheit verbunden ist eine Zentralverriegelungsanlage (2).

Bei Annäherung einer menschlichen Hand an einen der Türgriffe ändert sich das Dielektrikum im elektrischen Feld, das durch die Kondensatorelektroden des jeweiligen Türgriffsensors (5A, 5B, 5C, 5D, 5E) erzeugt wird, wobei am dem Türgriffsensor eine Änderung der Kapazität sensiert wird. Dabei ist in der Auswerte- und Ansteuereinheit (1) ein erster Kapazitätsänderungsschwellwert (Annäherungsschwelle) gespeichert, bei deren Überschreitung die Auswerte- und Ansteuereinheit (1) die zugeordnete Sende-/Empfangsantenne (6A, 6B, 6C, 6D, 6E) zur Aussendung des Funk-Startsignals für die Authentifikationskommunikation mit dem ID-Geber (4) ansteuert. Gleichzeitig mit der weiteren Annäherung der Hand an den Türgriff erfolgt dann die eigentliche Authentifikationskommunikation, wobei die Authentifikationskommunikation in der Regel bereits abgeschlossen ist bevor die Hand zur Entriegelung haptisch in den Türgriff eingegriffen hat. Dabei beträgt die Zeitdauer für die Authentifikationskommunikation lediglich ca. 100 Millisekunden. Auch wenn die Authentifikationskommunikation erfolgreich abgeschlossen wurde und ein berechtigter ID-Geber identifiziert wurde, erfolgt die Entriegelung der Fahrzeugtüren über die Zentralverriegelungsanlage (2) nur dann, wenn die Hand haptisch in den Türgriff eingegriffen hat, was durch eine Kapazitätsänderung am Türgriffsensor (5A, 5B, 5C, 5D, 5E) um einen höheren, zweiten vorbestimmten Wert (Entriegelungsschwelle) erkannt wird. Damit soll verhindert werden, dass bei einer bloßen Annäherung ohne tatsächliche Entriegelungsabsicht eine ungewollte Entriegelung ausgelöst wird.

In einer nicht unter den Schutzumfang des Patents fallenden Ausführungsform wird ein separater Niederschlagssensor (3) zur Niederschlagsdetektion verwendet.

Wird nun mit diesem Niederschlagssensor Niederschlag detektiert, so wird die Authentifikationskommunikation durch das Aussenden des Funk-Startsignals nur dann gestartet, wenn an einem Türgriffsensor (5A, 5B, 5C, 5D, 5E) mindestens eine Kapazitätsänderung entsprechend der (höheren) Entriegelungsschwelle sensiert wird. Mit anderen Worten wird die kapazitive Türgriffsensorik bei Niederschlag bewusst unempfindlicher eingestellt, um niederschlagsbedingte Fehlauslösungen zu vermeiden.

In der erfindungsgemäßen Ausführungsform kann auf einen separaten Niederschlagssensor verzichtet werden. Dabei wird auf die kapazitiven Türgriffsensoren (5A, 5B, 5C, 5D, 5E) zurückgegriffen, wobei als Mittel zur Detektion von Niederschlag mindestens zwei kapazitive Türgriffsensoren verwendet werden. Die erfmdungsgemäße Detektion von Niederschlag erfolgt nun dadurch, dass das Eintreten eines Ereignisses überwacht wird, das darin besteht, dass an einem ersten Türgriffsensor (5A, 5B, 5C, 5D, 5E) und an mindestens einem weiteren Türgriffsensor (5A, 5B, 5C, 5D, 5E) innerhalb eines Kontrollzeitfensters jeweils mindestens einmal eine Kapazitätsänderung um mindestens einen vorbestimmten wert, der vorzugsweise der Annäherungsschwelle entspricht, sensiert wird. Betrachtet man das Sensorsignal eines Türgriffsensors für sich allein, wie das bei einem Passive Entry/Go-System bisher der Fall ist, so ist es nicht möglich, zwischen einer Kapazitätsänderung aufgrund der Annäherung einer Hand und einer Kapazitätsänderung aufgrund von Regen zu unterscheiden.

Demgegenüber nutzt die erfindungsgemäße Ausführungsform die Erkenntnis aus, dass es a) extrem unwahrscheinlich ist, dass innerhalb eines Kontrollzeitfensters (vorzugsweise kleiner als 1 Sekunde) bei zwei Türgriffen/Türgriffsensoren die Annäherung einer Hand erfolgt, während es b) extern wahrscheinlich ist, dass im Falle von Niederschlag das Dielektrikum im elektrischen Feld von mindestens zwei Türgriffsensoren (5A, 5B, 5C, 5D, 5E) verändert wird, da der Niederschlag nicht lokal auf nur einen Türgriff/Türgriffsensor beschränkt sein wird. Damit ist durch die Überwachung der Kapazitätsänderungen an mindestens zwei Türgriffsensoren (5A, 5B, 5C, 5D, 5E) innerhalb eines Kontrollzeitfensters ein zuverlässiges und kostengünstiges Mittel zur Detektion von Niederschlag geschaffen worden. Versuche haben gezeigt, dass ein Kontrollzeitfenster zwischen 1 Sekunde und 15 Sekunden für eine zuverlässige Niederschlagserkennung am besten geeignet ist.

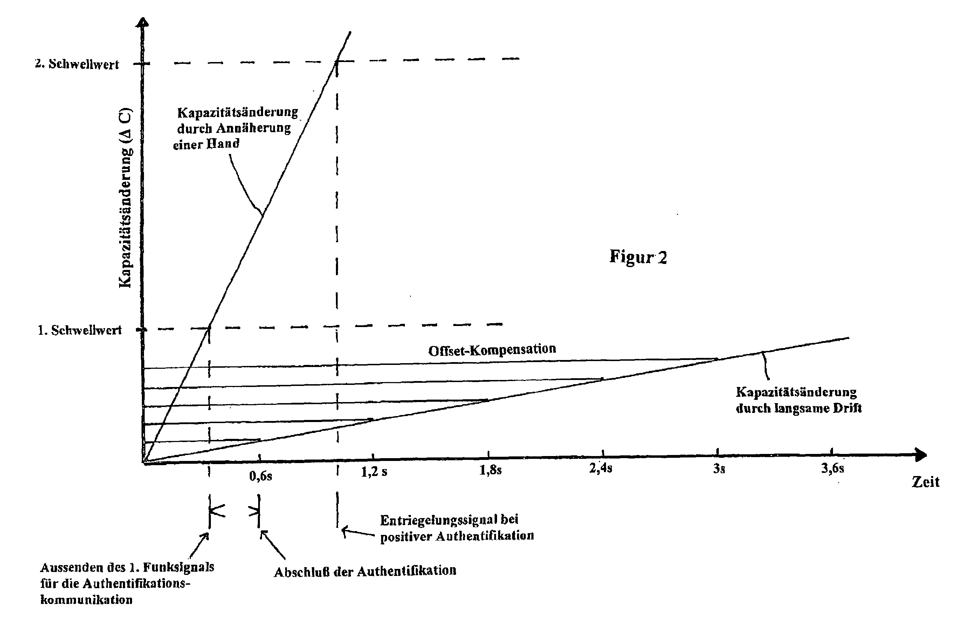

Figur 2 zeigt den Kapazitätsverlauf an einem Türgriffsensor bei Annäherung einer Hand. Dabei wird zunächst ein 1. Schwellwert (Annäherungsschwelle) erreicht, worauf hin dann das Aussenden des 1. Funksignals für Authentifikationskommunikation ausgesendet wird, bei weiterer Annäherung bis zum (zumindest fast) haptischen Eingreifen der Hand in den Türgriff wird dann auch ein zweiter Schwellwert (Entriegelungsschwelle) überschritten, woraufhin dann bei positiver Authentifikation ein Entriegelungssignal an die Zentralverriegelungsanlage (2) gegeben wird. Langsame Kapazitätsänderungen (Drift) werden durch eine Offset-Kompensation ausgeglichen.

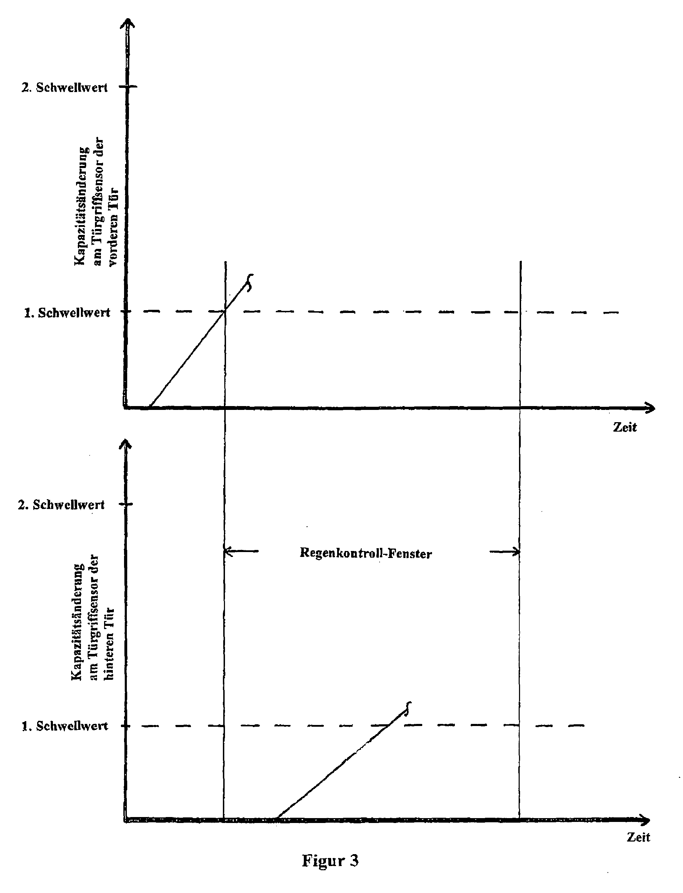

In Figur 3 ist der Kapazitätsverlauf an zwei Türgriffsensoren (5A, 5B) innerhalb des Kontrollzeitfensters mit jeweils niederschlagsbedingten Kapazitätsänderungen gezeigt. Dabei beginnt das Kontrollzeitfenster vorzugsweise damit, wenn an einem Türgriffsensor (5A) erstmals eine Kapazitätsänderung um mindestens einen vorbestimmten Wert sensiert wird, wobei diese Kapazitätsänderung, welche eine Triggerfunktion aufweist, ebenfalls als relevante Kapazitätsänderung innerhalb des Kontrollzeitfensters mitbewertet wird. Auf diese Weise ist ein separater Triggermechanismus zum Starten des Kontrollzeitfensters entbehrlich.

Um die Zuverlässigkeit der Niederschlagsdetektion zu erhöhen, ist es vorgesehen, dass das Ereignis nur dann als eingetreten gilt, wenn innerhalb des Kontrollzeitfensters an einem Türgriffsensor (5A, 5B, 5C, 5D, 5E) nicht nur einmal, sondern mindestens zweimal eine Kapazitätsänderung um mindestens einen vorbestimmten Wert sensiert wird. Ferner ist es vorgesehen, um die Zuverlässigkeit der Niederschlagsdetektion zu erhöhen und um Artefakte auszuschließen, dass Niederschlag nur dann als detektiert gilt, wenn auch das Ereignis als solches mindestens zweimal eingetreten ist. Zu diesem Zweck ist in der Auswerte-/und Ansteuereinheit ein Ereigniszähler implementiert, der jedes Mal dann, wenn das Ereignis eingetreten ist, um den Wert Eins erhöht wird. In umgekehrter Weise wird der Ereigniszähler um den Wert Eins erniedrigt, wenn das Ereignis innerhalb des Kontrollzeitfensters nicht eingetreten ist, um sicherzustellen, dass dann, wenn kein Niederschlag vorhanden ist, wieder bereits bei Überschreitung der Annäherungsschwelle das Funk-Startsignal gesendet wird. In jedem Fall wird der Ereigniszähler auf den Anfangswert Null zurückgesetzt, wenn die Authentifikationskommunikation mit dem ID-Geber (4) erfolgreich beendet wurde und an einem Türgriffsensor (5A, 5B, 5C, 5D, 5E) eine Kapazitätsänderung um mindestens den vorbestimmten zweiten Wert (Entriegelungsschwelle) sensiert wird.

In der Praxis hat es sich gezeigt, dass die Niederschlagsdetektion dann besonders zuverlässig ist, wenn nicht beliebig zwei oder mehr Türgriffsensoren (5A, 5B, 5C, 5D, 5E) für die Ereignisüberwachung verwendet werden, sondern, wenn die beiden Türgriffsensoren einer Fahrzeugseite (Fahrerseite, Beifahrerseite) jeweils als ein Türgriffpaar zusammengefasst werden, wobei der Eintritt des Ereignisses für jedes Türgriffpaar (5A, 5B; 5C, 5D) unabhängig ausgewertet wird. Dies ist deshalb besonders vorteilhaft, da aufgrund der Parksituation oder der Windverhältnisse oftmals nur eine Fahrzeugseite mit Niederschlag beaufschlagt wird.

Abschließend soll noch darauf hingewiesen werden, dass die Überwachung der Kapazitätsverläufe von zwei oder mehr Türgriffsensoren (5A, 5B, 5C, 5D, 5E) innerhalb eines Kontrollzeitfensters als einfaches und kostengünstiges Mittel zur Niederschlagsdetektion verwendet werden kann, um ein automatisches Schließen eines Kraftfahrzeug-Schiebedaches, eines Kraftfahrzeug-Verdecks oder einer Kraftfahrzeugscheibe über eine motorische Schließvorrichtung bei Niederschlag zu realisieren.

### Bezugszeichenliste

1) Auswerte- und Ansteuereinheit
2) Zentralverriegelungsanlage
3) Niederschlagssensor
4) ID-Geber

5A) Türgriffsensor (Fahrerseite, vom)
5B) Türgriffsensor (Fahrerseite, hinten)
5C) Türgriffsensor (Beifahrerseite, vom)
5D) Türgriffsensor (Beifahrerseite, hinten)
5E) Türgriffsensor (Heckklappe)

6A) Sende-/Empfangsantenne (Fahrerseite, vom)
6B) Sende-/Empfangsantenne (Fahrerseite, hinten)
6C) Sende-/Empfangsantenne (Beifahrerseite, vom)
6D) Sende-/Empfangsantenne (Beifahrerseite, hinten)
6E) Sende-/Empfangsantenne (Heckklappe)

## Patentansprüche

1. Verfahren zum Steuern der Entriegelung oder Verriegelung der Türen eines Kraftfahrzeuges
- mit einem benutzerseitig mitführbaren, tragbaren ID-Geber (4),
- mit mindestens einer fahrzeugseitigen Sende-/Empfangsantenne (6A, 6B, 6C, 6D, 6E) für eine funkbasierte Authentifikationskommunikation mit dem ID-Geber (4),
- mit mindestens einem kapazitiven Türgriffsensor (5A, 5B, 5C, 5D, 5E), der als Näherungssensor jeweils dem Türgriff einer Fahrzeugtür zugeordnet ist,
- wobei die Authentifikationskommunikation durch das Aussenden eines Funk-Startsignals durch die fahrzeugseitige Sende-/Empfangsantenne (6A, 6B, 6C, 6D, 6E) gestartet wird, wenn an dem Türgriffsensor (5A, 5B, 5C, 5D, 5E) eine Kapazitätsänderung um einen vorbestimmten ersten Wert sensiert wird,
- wobei ein Mittel zur Detektion von Niederschlag verwendet wird,
- **dadurch gekennzeichnet, dass** im Fall der Detektion von Niederschlag die Authentifikationskommunikation durch das Aussenden des Funk-Startsignals nur dann gestartet wird, wenn an dem Türgriffsensor (5A, 5B, 5C, 5D, 5E) eine Kapazitätsänderung um einen vorbestimmten zweiten Wert sensiert wird, wobei der zweite Wert größer ist als der erste Wert, und **dass**
als Mittel zur Detektion von Niederschlag mindestens zwei kapazitive Türgriffsensoren (5A, 5B, 5C, 5D, 5E) verwendet werden, wobei Niederschlag detektiert wird, indem das Eintreten eines Ereignisses überwacht wird, das darin besteht, dass an einem ersten Türgriffsensor und an mindestens einem weiteren Türgriffsensor innerhalb eines Kontrollzeitfensters jeweils mindestens einmal eine Kapazitätsänderung um mindestens einen vorbestimmten Wert sensiert wird.

2. Verfahren nach Anspruch 1,
**dadurch gekennzeichnet, dass**
das Ereignis nur dann als eingetreten gilt, wenn innerhalb des Kontrollzeitfensters an einem Türgriffsensor (5A, 5B, 5C, 5D, 5E) mindestens zweimal eine Kapazitätsänderung um mindestens einen vorbestimmten Wert sensiert wird.

3. Verfahren nach Anspruch 1 oder 2,
**dadurch gekennzeichnet, dass**
das Kontrollzeitfenster beginnt, wenn an einem Türgriffsensor (5A, 5B, 5C, 5D, 5E) eine Kapazitätsänderung um mindestens einen vorbestimmten Wert sensiert wird.

4. Verfahren nach einem der vorstehenden Ansprüche,
**dadurch gekennzeichnet, dass**
- jedes Mal dann, wenn das Ereignis eingetreten ist, ein Ereigniszähler inkrementiert wird,
- Niederschlag nur dann als detektiert gilt, wenn der Ereigniszähler einen vorbestimmten Wert erreicht hat.

5. Verfahren nach Anspruch 4,
**dadurch gekennzeichnet, dass**
der Ereigniszähler dekrementiert wird, wenn das Ereignis innerhalb des Kontrollzeitfensters nicht eingetreten ist.

6. Verfahren nach Anspruch 4 oder 5,
**dadurch gekennzeichnet, dass**
der Ereigniszähler auf den Anfangswert zurückgesetzt wird,
wenn die Authentifikationskommunikation mit dem ID-Geber (4) erfolgreich beendet wurde und an einem Türgriffsensor (5A, 5B, 5C, 5D, 5E) eine Kapazitätsänderung um mindestens den vorbestimmten zweiten Wert sensiert wird.

7. Verfahren nach einem der vorstehenden Ansprüche,
**dadurch gekennzeichnet, dass**
die beiden Türgriffsensoren (5A, 5B, 5C, 5D, 5E) einer Fahrzeugseite (Fahrerseite, Beifahrerseite) jeweils als ein Türgriffpaar zusammengefasst werden, wobei der Eintritt des Ereignisses für jedes Türgriffpaar unabhängig ausgewertet wird.

## Claims

1. Method of controlling the unlocking or locking of vehicle doors
- with a portable ID sensor (4) carried by the user,
- with at least one transmitting/receiving aerial on the vehicle (6A, 6B, 6C, 6D, 6E) for radio-based authentication communication with the ID sensor (4),
- with at least one capacitive door handle sensor (5A, 5B, 5C, 5D, 5E) which is assigned as a proximity sensor to the door handle of one respective vehicle door,
- whereby authentication communication is started by a radio start signal being given by the transmission/receiving aerial (6A, 6B, 6C, 6D, 6E) on the vehicle whenever a change in capacity by a pre-determined first value is measured at the door handle sensor (5A, 5B, 5C, 5D, 5E),
- whereby a means of detecting precipitation is used,
- wherein in the case of precipitation detection, the authentication communication is only started by the transmission of the radio start signal if a change in capacity by a pre-determined second value is measured at the door handle sensor (5A, 5B, 5C, 5D, 5E), whereby the second value is greater than the first value,
and that
- at least two capacitive door handle sensors (5A, 5B, 5C, 5D, 5E) are used to detect precipitation, whereby precipitation is detected by the occurrence of an event being monitored, to the effect that a change in capacity by at least a pre-determined value is measured within a control time slot on one first door handle sensor and at least one further door handle sensor.

2. Method according to claim 1,
wherein
the event is only considered to have occurred when a change in capacity by at least a pre-determined value is measured at least twice within the control time slot at one door handle sensor (5A, 5B, 5C, 5D, 5E).

3. Method according to claim 1 or 2,
wherein
the control time slot begins when a change in capacity by at least a pre-determined value is measured at a door handle sensor (5A, 5B, 5C, 5D, 5E).

4. Method according to one of the above claims,
wherein
- every time the event occurs, an event counter is incremented,
- precipitation is only considered as detected when the event counter has reached a pre-determined value.

5. Method according to claim 4,
wherein
the event counter is decremented if the event does not occur within the control time slot.

6. Method according to claim 4 or 5,
wherein
the event counter is reset to the original value
if the authentication communication with the ID sensor (4) has been completed successfully and a change in capacity by at least the pre-determined second value has been detected at one door handle sensor (5A, 5B, 5C, 5D, 5E).

7. Method according to one of the above claims,
wherein
the two door handle sensors (5A, 5B, 5C, 5D, 5E) on one side of a vehicle (driver side, passenger side) are combined as one pair of door handles each, whereby the occurrence of the event is evaluated separately for each pair of door handles.

## Revendications

1. Procédé de commande du déverrouillage ou du verrouillage des portes d'un véhicule automobile, comprenant :
- un transmetteur d'identification (4), portable, que l'utilisateur garde avec lui,
- au moins une antenne émettrice / réceptrice (6A, 6B, 6C, 6D, 6E), intégrée au véhicule, pour une communication d'authentification, par radio, avec le transmetteur d'identification (4),
- au moins un capteur capacitif de poignée de porte (5A, 5B, 5C, 5D, 5E) qui est affecté à chaque fois à la poignée d'une porte du véhicule, en tant que capteur de proximité,
- où la communication d'authentification est lancée par l'émission d'un signal radio de mise en marche passant par l'antenne émettrice / réceptrice (6A, 6B, 6C, 6D, 6E), intégrée au véhicule, si une modification de capacité, d'une première valeur prédéterminée, est détectée, au niveau du capteur de poignée de porte (5A, 5B, 5C, 5D, 5E),
- où l'on utilise un moyen de détection de pluie,
**caractérisé en ce que**, en cas de détection de pluie, la communication d'authentification est alors lancée par l'émission du signal radio de mise en marche, seulement si une modification de capacité, d'une deuxième valeur prédéterminée, est détectée au niveau du capteur de poignée de porte (5A, 5B, 5C, 5D, 5E), où la deuxième valeur est supérieure à la première valeur, et **en ce que** l'on utilise, comme moyens de détection de pluie, au moins deux capteurs capacitifs de poignée de porte (5A, 5B, 5C, 5D, 5E), où de la pluie est détectée, tandis que l'occurrence d'un événement est contrôlée, événement qui réside dans le fait qu'une modification de capacité, d'au moins une valeur prédéterminée, est détectée respectivement au moins une fois au niveau d'un premier capteur de poignée de porte et au moins au niveau d'un autre capteur de poignée de porte, à l'intérieur d'une fenêtre de temps de contrôle.

2. Procédé selon la revendication 1, **caractérisé en ce que** l'événement est considéré alors comme s'étant produit, seulement si une modification de capacité, d'au moins une valeur prédéterminée, est détectée au moins deux fois au niveau d'un capteur de poignée de porte (5A, 5B, 5C, 5D, 5E), à l'intérieur de la fenêtre de temps de contrôle.

3. Procédé selon la revendication 1 ou 2, **caractérisé en ce que** la fenêtre de temps de contrôle commence si une modification de capacité, d'au moins une valeur prédéterminée, est détectée au niveau d'un capteur de poignée de porte (5A, 5B, 5C, 5D, 5E).

4. Procédé selon l'une quelconque des revendications précédentes, **caractérisé en ce que**
- à chaque fois que l'événement s'est produit, un compteur d'événements est incrémenté,
- de la pluie est considérée alors comme étant détectée, seulement si le compteur d'événements a atteint une valeur prédéterminée.

5. Procédé selon la revendication 4, **caractérisé en ce que** le compteur d'événements est décrémenté si l'événement ne s'est pas produit à l'intérieur de la fenêtre de temps de contrôle.

6. Procédé selon la revendication 4 ou 5, **caractérisé en ce que** le compteur d'événements est remis à la valeur initiale, si la communication d'authentification avec le transmetteur d'identification (4) a été achevée avec succès et si une modification de capacité, d'au moins la deuxième valeur prédéterminée, est détectée au niveau d'un capteur de poignée de porte (5A, 5B, 5C, 5D, 5E).

7. Procédé selon l'une quelconque des revendications précédentes, **caractérisé en ce que** les deux capteurs de poignée de porte (5A, 5B, 5C, 5D, 5E) d'un côté du véhicule (côté conducteur, côté passager) sont regroupés respectivement comme une paire de poignées de porte, où l'occurrence de l'événement, pour chaque paire de poignées de porte, est analysée de façon indépendante.
